# EUROPEAN PATENT SPECIFICATION

(11) **EP 2 880 970 B1**
(45) Date of publication and mention of the grant of the patent: **14.09.2016**
(21) Application number: 14196999.8
(22) Date of filing: 09.12.2014
(51) Int. Cl.: A01G 9/04

(54) **Plant tray, assembly of a tray and at least one plant pot, method for assembling an assembly, and method for handling plant pots**
Pflanzenschale, Anordnung einer Schale und mindestens eines Pflanztopfs, Verfahren zum Aufbauen einer Anordnung und Verfahren zur Handhabung von Pflanztöpfen
Plateau à pots de fleur, ensemble d'un plateau et au moins un pot de fleur, procédé d'assemblage d'un ensemble et procédé pour manipuler des pots de fleur

(30) Priority: 09.12.2013 NL 2011918
(43) Date of publication of application: 10.06.2015
(73) Proprietor: Houdstermaatschappij Modiform B.V., 3831 KA Leusden (NL)
(72) Inventor: van Heugten, Petrus Johannes, 3831 KA Leusden (NL)
(74) Representative: V.O.

(56) References cited:
- EP-A1- 0 649 592
- EP-A1- 2 499 902
- US-A- 5 022 183
- US-A1- 2004 211 118

## Description

The invention relates to plant trays, especially plant trays for holding plant pots.

Plant trays normally have multiple compartments, each of them for holding a single plant pot, usually a pot being provided with one or more plants, see e.g. EP 2 499 902 A1. The plant trays can be plastic trays, usually formed by thermoforming and/or vacuum forming. Generally, the plant trays for holding plant pots are used for handling, transporting and/or storing plants potted in plastic plant pots. Often, the plastic plant pots are formed as relatively cheap pots which are used during the cultivation of the plants. For instance in case of ornamental plants, houseplants or indoor plants, a buyer of a respective plant will often use the plastic pot as an inner pot, and will put said pot into an outer pot, thereby at least mainly hiding said plastic pot from view. Alternatively, a buyer can remove the plant from the plastic pot in which it was sold, for instance in order to repot it and/or, for instance in case of garden plants, to transplant it. Often, the plastic plant pots are provided with prints, for instance to brighten up the pots, to provide information, such as plant characteristics, to show a trade mark, and/or for other purposes.

However, when such pot is held by the compartment of a conventional tray, the pot is generally inserted in the compartment so far that the largest part of its height is not protruding above the tray, such that falling over of the pot and/or plant can be counteracted. Since relatively cheap thermoformed plant trays are usually untransparent, any possibly present prints at the outside of the plant pot may thus not be visible for the greater part when the plant pot is held by the compartment. A problem of lowering the height of the tray is that the compartments become less deep. As a consequence of such lowering, the plant pots will be held less firmly, which may cause tipping over a plant pot, especially when a relatively large, high or heavy plant is provided in said plant pot.

An object of the present invention is to provide an alternative plant tray and/or an alternative method for handling plant pots. It is an object of the present invention to alleviate or solve at least one of the disadvantages of a conventional plant tray and/or a conventional method for handling plant pots, especially alleviating or solving at least one of the disadvantages above. In particular, the invention aims at providing a plant tray, wherein at least one of the disadvantages mentioned above is counteracted or advantages there above are obtained. More in particular, the invention aims at providing a plant tray, especially a thermoformed tray, preferably a display tray which at the one hand can counteract tipping over of plant pots and on the other hand can facilitate observing prints provided at the outside of said plant pots at least partly, preferably for at least a substantial part thereof.

In a first aspect, the present invention provides for a plant tray for holding plant pots, comprising at least one and preferably multiple plant pot compartments, wherein each compartment is arranged for receiving a plant pot, the compartment having one or more side wall segments for at least partly enclosing at least a lower portion of an outer wall of a plant pot, the compartment being provided with one or more eccentric protruding supporting surfaces for only supporting an eccentric portion of a bottom of a plant pot, wherein the compartment is arranged such that a bottom of a plant pot which has an outer wall substantially corresponding with the one or more side wall segments of said compartment, will, when said plant pot is inserted into said compartment in an inserting direction in which a central axis of the compartment is substantially aligned with a central axis of said plant pot, abut the one or more eccentric protruding supporting surfaces, thereby obstructing said bottom locally and subsequently facilitating misalignment of the pot with respect to the compartment when a force is applied to the pot, preferably a force applied at least partly in a downward direction and/or a direction directed inward the compartment, especially a force applied substantially in the insertion direction and/or in the longitudinal direction of the pot and/or compartment.

By providing the compartment with one or more eccentric protruding supporting surfaces for only supporting an eccentric portion of a bottom of a plant pot, a plant tray can be provided which facilitates misaligning a pot with respect to the compartment. As a result, a pot can be clamped in a skewed position in the compartment relatively well and/or firmly. Consequently, a relatively large part of the pot may be protruding from the compartment, thereby enabling observing a relatively large part of an outer surface of its outer wall. For example, the trays may be used for displaying the pots and/or plants provided in said pots, for instance in a store.

By making the tray and/or the plant pot at least partly flexible and/or resiliently, it may be facilitated that the pot can be clamped into the tray relatively well, easily and/or firmly.

By forming at least one of the one or more eccentric protruding supporting surfaces as a ledge or as a substantially elongated surface, preferably extending at or near a boundary or outside wall segment of the compartment, it can be facilitated that a pot being inserted into the compartment can be pushed out of alignment relatively easily.

By providing only a relatively small area of a cross section of the compartment with eccentric protruding supporting surfaces and/or by keeping a central area of said cross section free of the protruding surfaces, it can be counteracted that the supporting surfaces will support to the pot to such extent that the pot cannot or not easily become misaligned.

By providing a tray having an outer edge section located adjacent to at least one compartment located near an outer edge of the tray, which section is lower than a central section of said tray, a pot present in said compartment located near said outer edge of the tray can on the one hand be relatively well visible from the side of the outer edge and can on the other hand be supported relatively well by a relatively high side wall segment located at or near the central section of the tray.

The invention further relates to an assembly of a tray and at least one plant pot.

Furthermore, the invention relates to a method for assembling an assembly of a plant tray and at least one plant pot held by a compartment of said tray.

The invention also relates to a method for handling plant pots, preferably displaying, storing and/or transporting plant pots.

Advantageous embodiment of the invention are described below and in the appended claims.

By way of non-limiting examples only, embodiments of the present invention will now be described with reference to the accompanying Figures in which:
Figure 1 shows a schematic perspective view of an embodiment of a tray according to an aspect of the invention;
Figure 2 shows a schematic top view of the tray of Figure 1;
Figure 3 shows a schematic perspective view of tray of Figure 1 provided with a number of plant pots; and
Figure 4 shows a partly cut-away schematic cross-sectional view of the tray of Figure 3 provided with a plant pot.

The embodiments disclosed herein are shown as examples only and should by no means be understood as limiting the scope of the claimed invention in any way. In this description the same or similar elements have the same or similar reference signs.

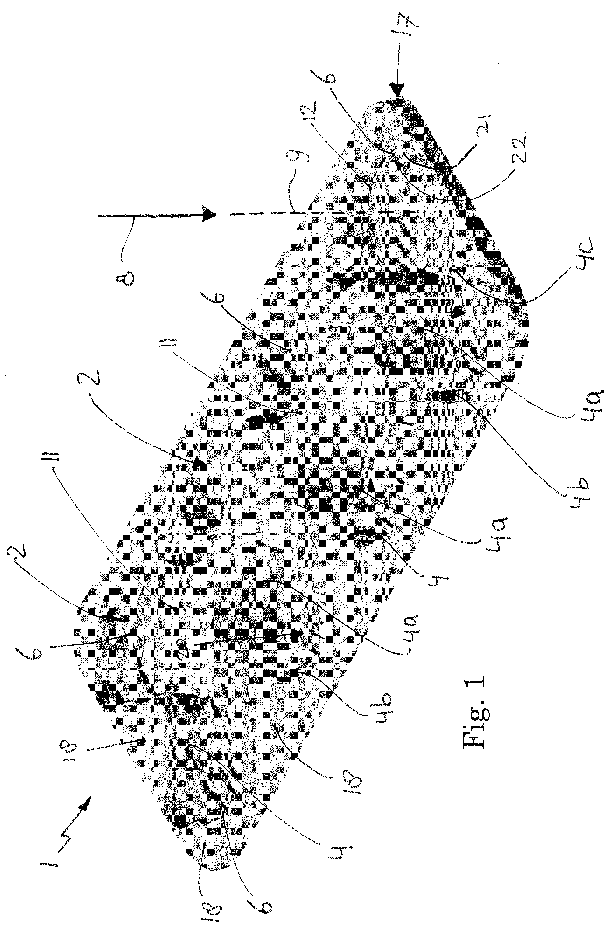

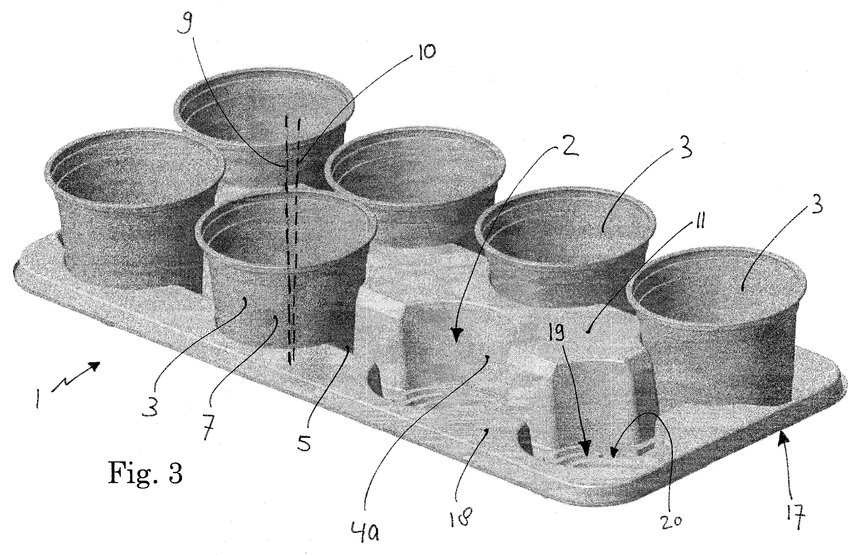

Figure 1 shows a schematic perspective view of an embodiment of a plant tray 1 for holding plant pots. The tray 1, which can be a multi-cell tray, may for instance be a growing tray for growing plants, a transport tray for transporting plants and/or pots, and-or a display tray for displaying plants and/or pots. The tray 1 comprises at least one and preferably multiple plant pot compartments 2. Each compartment 2 is arranged for receiving a plant pot 3, such as can be seen from Figure 3. The compartment 2 has one or more side wall segments 4 for at least partly enclosing at least a lower portion 5 of an outer wall 7 of a plant pot 3. Preferably, the compartment 2 may comprise at least two side wall segments 4, which may be arranged and located such that a corresponding plant pot cannot be removed laterally from between said side wall segments. Alternatively or additionally, said at least two side wall segments 4 may be located at substantially opposite sides of the compartment 2.

It is noted that the compartments 2 may be formed as cells or cavities, preferably each of them being arranged for holding a single plant pot.

Further, the compartment 2 is provided with one or more eccentric protruding supporting surfaces 6 for only supporting an eccentric portion of a bottom of a plant pot 3. For example, said eccentric protruding supporting surface 6 may be formed as a terrace. It is noted that in this description an eccentric surface 6 is to be understood at least as but not limited to meaning that the surface 6 is located eccentric with respect to a central axis 9 of the respective compartment 2.

Furthermore, the compartment 2 is arranged such that a bottom of a plant pot 3 which has an outer wall 7 substantially corresponding with the one or more side wall segments 4 of said compartment 2, will, when said plant pot 3 is inserted into said compartment 2 in an inserting direction 8 in which a central axis 9 of the compartment 2 is substantially aligned with a central axis 10 of said plant pot 3, abut the one or more eccentric protruding supporting surfaces 6, thereby obstructing said bottom locally and subsequently facilitating misalignment of the pot 3 with respect to the compartment 2 when a force is applied to the pot 3, preferably a force applied at least partly in a downward direction and/or a direction directed inward the compartment 2, especially a force applied substantially in the insertion direction 8 and/or in the longitudinal direction of the pot 3 and/or compartment 2.

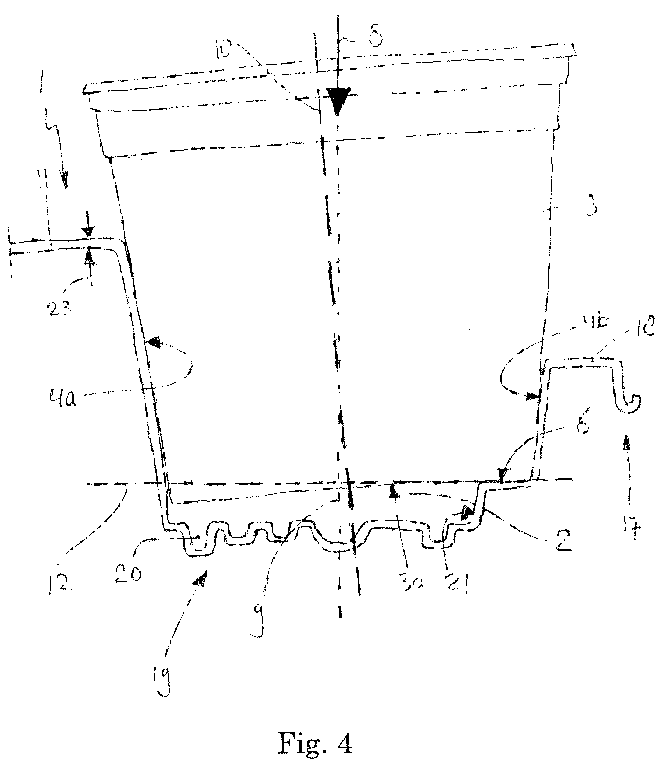

As a result, when a pot 3 is inserted with its central axis 10 substantially coinciding with the central axis 9 of the compartment 2, it may be inserted relatively easily. After the bottom 3a of the pot 3 hits the supporting surface 6, at the side of said supporting surface 6 the bottom of the pot can substantially not be pushed any further into the compartment 2, as can for instance be seen in Figure 4. However, because the eccentric supporting surface 6 is only provided locally, the bottom of the pot may be pushed further into the compartment 2 at a side of the compartment 2 spaced away from said eccentric supporting surface 6, preferably at a side substantially opposite to said eccentric supporting surface 6. As a result, the pot 3 can be brought into a position in which it is sloping with respect to the compartment 2, and in which it is clamped inside said compartment 2. It is noted that the sloping position of the pot 3 may thus result in that the central axis 10 of the pot 3 is tilted with respect to the central axis 9 of the compartment 2, as can be seen in Figures 3 and 4.

As further can be seen in Figures 3 and 4, at least one of the plant pot compartments 2 can be provided with a plant pot 3, especially a plastic pot. Advantageously, multiple compartments accommodate a pot 3, for instance each compartment holds a respective pot 3. Preferably, the plant pot may be provided with filling and/or a substrate or growing substrate, for instance comprising potting soil, compost, cork and/or other material. Further, the pot can be provided with one or more plants, especially an ornamental plant, or a houseplant or so-called indoor plant.

Advantageously, the plant pot 3 is at least partly flexible and/or resilient. For instance, it can have an at least partly flexible bottom and/or an at least partly flexible outer wall 7, especially wherein at least a lower portion 5 of the outer wall 7 is at least partly flexible and/or resilient.

Additionally or alternatively, the tray 1 may be at least partly flexible and/or resilient. For example, one or more tray sections defining a compartment 2, especially a tray section defining one or more side wall segments 4 of said compartment 2, can be at least partly flexible and/or resilient. In embodiments, the plant tray 1 may for instance be a plastic tray, especially a thermoformed and/or vacuum formed tray. As can for instance be seen in Figure 4, the tray 1 may be formed from a relatively thin sheet, especially a thermoplastic sheet, which may result in a relatively thin local thickness 23 of the tray 1.

By making the tray 1 and/or pot 3 at least partly flexible, and preferably resilient, the pot 3 may become deformed in order to facilitate that a pot 3 inserted into the respective compartment 2 can become misalignment with respect to said compartment 2, e.g. the central axes 9, 10 thereof can come to be under an angle with respect to each other, for example an angle between 0.5° and 15°, preferably between 0.1° and 10°, more preferably between 0.5° and 8° such as about 1°, 2°, 3° or 5°.

It is noted that the wall segments 4 of the compartments 2 may extend substantially upwardly. Preferably, said wall segments 4 can be tilted outwardly to some extent. Advantageously, the wall segments 4 may extend substantially along the outer surface of a fictive cone, wherein said fictive cone has its point facing downward and is outer surface under a relatively small angel with its central axis. For example, said angle can be between 0.5° and 15°, preferably between 3° and 10°, such as about 5° or 8°, for instance such that the angle of inclination of the wall segments 4 of the compartments 2 can correspond to the angle of inclination of plastic plant pots, which can be 5° or 8°.

In embodiments, a plant pot 3 to be inserted into the compartment 2 of the tray 1 can have an outer wall 7 which or a lower section of which corresponds substantially to a cylinder. However, the pot 3 can be shaped otherwise. For example, the plant pot's outer wall 7, or at least a lower section of said wall 7, may correspond to a frustum of a cone or to a so-called truncated cone, especially a relatively steep cone and/or a substantially right circular cone wherein the axis of the cone passes substantially through the centre of a circular base plane of the cone, at right angles to said base plane. As an other example, the pot 3, or at least its lower section, can be shaped like a truncated pyramid, especially a relatively steep one. It is noted that the pot's outer wall 7, or its lower section, can lean outward under a angle, especially an angle between 0.5° and 15°, preferably between 3° and 10°, such as about 5° or 8°. Although at least the lower section of the pot 3 advantageously may have a shape tapering in a downward direction, alternatively the pot 3 or its lower section may be shaped differently. For example, it can be shaped substantially as a prism or a rectangular block.

Additionally or alternatively, the plant pot 3 to be inserted into the compartment 2 may have an outer wall 7 substantially corresponding with the one or more side wall segments 4 of the compartment 2. This is, they may have corresponding shapes, orientations, longitudinal directions and/or sizes.

Here, the side wall segments 4 of the compartment 2 taper in an inward and/or downward direction of the compartment 2. For example, said inward direction or said downward direction can substantially correspond to the insertion direction 8. For instance, the side wall segments 4 may taper under a angle between 0.5° and 15°, preferably between 3° and 10°, such as about 5° or 8°. By said tapering, the compartment 2 can for instance be arranged for receiving a plant pot 3 with a corresponding outer wall 7 and/or for guiding the pot's outer wall, preferably substantially in the inserting direction 8, especially in a self-locating manner. However, the compartment 2 does not need to be tapered and may have any suitable shape, for example a shape corresponding to the exemplary shapes described above for the outer wall 7 of the pot 3 or its lower section.

It is noted that, in the embodiment shown in the Figures, each compartment 2 is provided with one eccentric protruding supporting surface 6. However, a compartment 2 may alternatively be provided with multiple supporting surface 6, such as for example two, three, four, five or even more of such surfaces 6.

Preferably, the one or more eccentric protruding supporting surfaces 6 of a respective compartment 2 are extending substantially in or near a first cross section 12 of said compartment 2. This means that multiple supporting surfaces 6 can be located substantially in a single supporting plane and may thus together form substantially one intermittent supporting surface. It is noted that the first cross section 12 can preferably be substantially transverse to the central axis 9 of said respective compartment 2. The supporting surface or surfaces 6 can be substantially flat.

In embodiments, at least one of the one or more eccentric protruding supporting surfaces 6 can be formed as a ledge 6a or as a substantially elongated surface 6b, preferably extending at or near a boundary of the compartment 2 and/or at or near an outside wall segment 4 of the compartment 2.

In embodiments, the compartment 2 may be arranged to receive a plant pot defining a bottom surface being smaller than a cross-section of the compartment located at the level of the supporting surface 6, preferably receive it in a clamping manner. As a result, the tray 1 can be arranged for receiving and/or holding differently sized and/or shaped plant pots.

Advantageously, a ledge 6a forming the protruding surface 6 can define an edge 21 of an ledge wall 22 extending substantially in a downward direction from said edge. It is noted that said edge 21, which may be rounded off or chamfered, can be shaped substantially as a part of a circle, preferably offset from a substantially round first cross-section 12 of the compartment 2 in an inward direction. Said ledge wall 22 can for instance be substantially offset with respect to the wall segments 4 of the compartment 2 in an inward direction. As a result, the compartment 2 may be arranged to receive and/or hold a plant pot defining a bottom surface being smaller than a cross-section 12 of the compartment 2 located at the level of the supporting surface 6. Said pot may then be clamped between the ledge wall 22 and a wall segment 4a located opposite thereof.

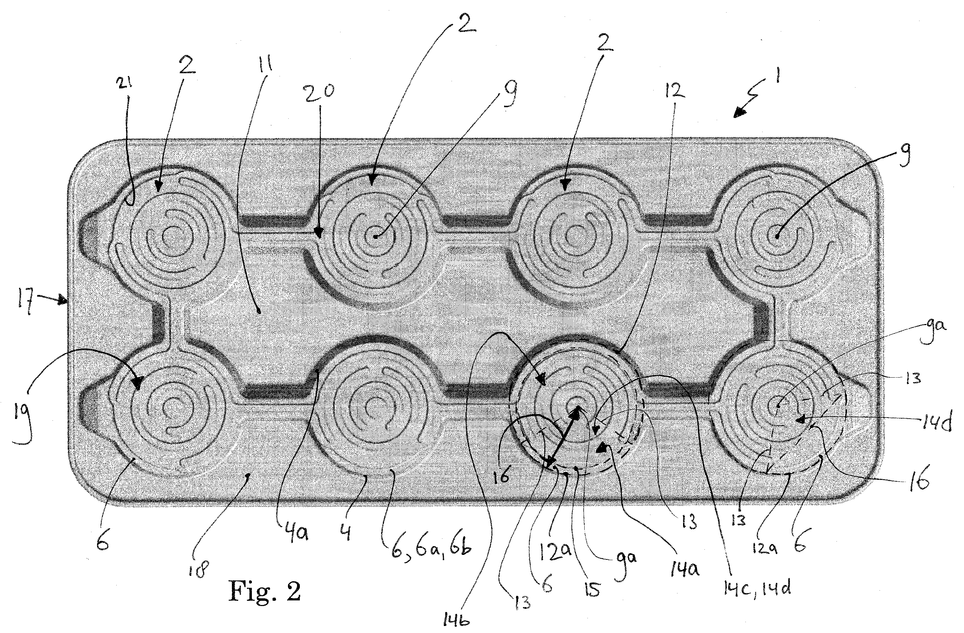

For example, the first cross section 12 of the compartment can be divided into two sectors 14a, 14b, e.g. imaginary sectors, as can be seen in Figure 2. Each of the sectors 14a, 14b can be defined at least by two straight lines 13 extending radially from a centre 9a of said cross section 12, e.g. two radii 13, and an outside line 12a defining a boundary of said cross section 12. The one or more eccentric protruding supporting surfaces 6 can be provided in a first 14a of the two sectors, whereas a second 14b of the two sectors can be free of protruding supporting surfaces 6. Advantageously, the first sector 14a is covering at most half of the area of the first cross section 12, preferably at most two-fifths, more preferably at most a third, such as at most a quarter of the area of the first cross section 12. Preferably, the first sector 14a can cover an area having a size equal to or smaller than the area covered by the second sector14b.

Alternatively or additionally, at least a central area 14c of the first cross section 12 is free of the protruding supporting surfaces 6. For example, a portion 14d of the central area 14c, which portion 14d is located within and/or overlaps with the first sector 12a, covers at least 20%, 40%, 60%, 70% or 80% of the area of said first sector 12a.

In embodiments, the central area 12c can be defined by a boundary line 15 being offset from the outside line 12a defining the boundary of the first cross section 12, preferably offset over at most 10%, 20%, 30%, 40%, 60% or 80% of the distance 16 from the outside line 12a defining the boundary of the first cross section to the centre 9a of said cross section 12.

Alternatively or additional, a portion 14d of the central area 14c located within the first sector 14a can be defined at least partly by a straight boundary line 16 connecting the distal ends of said two straight sector defining lines 13 extending radially from the centre 9a of said cross section 12.

As can be seen in Figure 1, the tray 1 can comprise a plurality of compartments 2. At least one of said compartments 2 may be located near an outer edge 17 of the tray 1. Advantageously, an outer edge section 18 of the tray 1 located adjacent to said at least one compartment 2 may be lower than a relatively central section 11 of the tray 1, especially such that one or more substantially upwardly extending side wall segments 4a of the compartment 2 which are located at or near said central section 11 are extending further upwardly than one or more substantially upwardly extending side wall segments 4b, 4c of the compartment 2 which are located at or near the outer edge section 18 of the tray1. As a result, a pot 3 placed in a compartment 2 located near an outer edge 17 of the tray 1may be clamped in said compartment 2 relatively well, whereas a relatively large part of a print on an outer surface 7 of the pot 3 may be visible, since it is not blocked from view by the outer edge section 18, due to the low height of said section 18, at least compared to the height of central sections 11 being relatively high. Here, all compartments 2 are located near a respective outer edge 17. However, in alternative embodiments, such as for instance when the tray 1 comprises three parallel rows of at least three compartments, one or more of the compartments may be located within a relatively high central section 11 or substantially between two or more relatively high central sections 11.

Here, the tray 1 is substantially rectangular. However, the tray may have any other suitable form, such as for instance a substantially round, oval, square, triangular, polygonal, or star shaped form. It is noted that the tray, like here, can have an array of compartments, preferably substantially regularly interspaced compartments. For example, the tray can be provided with multiple, preferably parallel, rows of compartments, between which rows one or more relatively central tray sections 11 can be located.

Advantageously, the pot 3, when held by the compartment 2, can lean slightly backward in its compartment 2, for example under an angle between 0.5° and 15°, preferably between 1° and 10°, more preferably between 2° and 8° such as about 3° or 5°. As a result, the pot 3 may be supported by one or more side wall segments 4a of said compartment which are located at or near a relatively central section 11 of the tray 1.

In the embodiment shown in the Figures, the compartment 2 is provided with a bottom 19 which is spaced away from the one or more eccentric protruding supporting surfaces 6 in a downward direction or an inward direction of the compartment 2. Said bottom 19 can be substantially flat. However, in embodiments, the bottom 19, or at least an upper side thereof, may be provided with relief. For example, the relief may comprise local reductions or channels 20, such as drainage channels, irrigation channels and/or aerating channels. Additionally or alternatively, the bottom 19 may be provided with openings, for example for drainage and/or aeration.

At least parts of undersides of the bottoms 19 of the compartments 2 may form at least parts of a base surface which can be placed on a bearing surface, such a shelf or table top. This is, the base surface of the tray 1 may thus comprise parts of the bottoms 19 of the compartments.

It is noted that the bottom 19 of a compartment 2 can be substantially extending in a direction substantially transverse to the central axis 9 of the compartment 2, especially in case when the longitudinal direction of the compartment is extending substantially in vertical direction and/or a direction substantially transverse to the horizontal plane of the tray and/or transverse to the base surface of the tray 1.

In embodiments, the compartments 2 may be tilted to some extent. For example, the compartment 2 may be tilted in an inward direction, e.g. the central axis 9 of the compartment 2 may lean backwards, especially backwards in a direction towards the central section 11 of the tray 1, for instance such that a plant pot 3 present in said compartment 2 can lean even further backward. For example, the central axis 9 can be under an angle with the vertical direction, wherein said angle can for instance be between 0.5° and 20°, preferably between 1° and 15°, more preferably between 3° and 10° such as about 5° or 8°.

Alternatively, the compartments 2 may be tilted in another direction. For example, the compartment 2 may be tilted in an outward direction. The central axis 9 of the compartment 2 may be leaning forward, e.g. in an outward direction of the tray 1, preferably such that the tilting of the axis 9 can at least partly balance out the tilting of the plant pot 3 with respect to the compartment 2. It is noted that said tilting can be due to misalignment of the central axis 10 of the pot 3 with respect to the central axis 9 of the compartment 2 by tiltedly clamping said pot 3 in said compartment 2. As a result of a slightly forwardly or outwardly leaning compartment, a pot 3 that is slanted with respect to the compartment 2 may thus be positioned relatively upright with respect to the horizontal plane.

It is noted that when the compartment 2 is tilted with respect to the tray 1, in case of a first cross section 12 being substantially transverse to the central axis 9 of said compartment 2, said first cross section 12 is skewed with respect to the horizontal plane. Advantageously, the eccentric protruding supporting surfaces 6 can be located at a higher part of said skewed first cross section, e.g. at a or near the one or more substantially upwardly extending side wall segments 4b, 4c of the compartment 2 which are located at or near the outer edge section 18, for instance when the one or more substantially upwardly extending side wall segments 4a of the compartment 2 which are located at or near the central section 11 should absorb a relatively large part of the load the pot is applying to the tray 1. However, the eccentric protruding supporting surfaces 6 can alternatively be located at a lower part of said skewed first cross section, e.g. at a or near the one or more substantially upwardly extending side wall segments 4a of the compartment 2 which are located at or near the central section 11.

The invention also relates to an assembly of a tray 1, especially a tray according to one of the embodiments disclosed above, and at least one plant pot 3. At least one plant pot compartment 2 of the tray 1 is provided with a plant pot 3, preferably a plant pot provided with filling, e.g. plant substrate, and/or a plant. In advantageous embodiments, the angle of inclination of an outer surface of the plastic plant pot 3 can correspond with the angle of inclination of the wall segments of the respective compartment 2. For instance, said angles of inclination may both be about 5° or about 8°. Advantageously, the plant pot may 3 be provided with a print and/or a label. The label and/or print may for instance comprise a trade mark, information about the plant, a price tag, decoration for the pot, and/or other data or prints.

It is noted that the tray 1 and/or the plant pot 3 may be provided with substantially smooth or even surfaces. For example, at least the side wall segments 4 arranged for contacting the outer surface 7 of the pot and/or corresponding parts of the outer surface of the said pot 3 may be substantially smooth or even. As a result, the pots may be inserted into the compartments in a relatively easy manner and/or the tray and/or pot may be produced in a relatively simple and/or cheap way, e.g. using a relatively simple mould. Additionally or alternatively, the tray 1 may be of such design that a mould for forming said tray and/or a mould part for forming the upper side of said tray can have a relieving shape. Additionally or alternatively, the pot 3 may be of such design that a mould for forming said pot and/or a mould part for forming the bottom and/or outer side of the pot can have a relieving shape.

Further, the invention relates to a method for assembling an assembly of a plant tray 1 and at least one plant pot 3 held by a compartment 2 of said tray 1. The method comprises providing a plant tray 1 having a compartment 2 with one or more side wall segments 4 for at least partly enclosing at least a lower portion 5 of an outer wall o7 f a plant pot 3, wherein said compartment 2 is provided with one or more eccentric protruding supporting surfaces 6 for supporting an eccentric portion of a bottom of a plant pot only. The method also comprises providing a plant pot 3 with an outer wall 7 corresponding with the one or more side wall segments 4 of the compartment 2. The pot 3 is inserted into the compartment 2 to such extent that a first eccentric part of the bottom of said pot 3 abuts with the one or more eccentric protruding supporting surfaces 6. Furthermore, the method comprises bringing the pot 3 out of alignment with respect to the compartment 2. For example, this may be done by moving a second eccentric part of the bottom of the pot 3 located substantially opposite the first eccentric bottom part to a level lower than a level of the one or more eccentric protruding supporting surfaces 6. As a result, the pot 3 can be held clampingly in the compartment 2.

Furthermore, the invention relates to a method for handling plant pots 3, wherein plant pots are handled, preferably displayed, stored and/or transported. It is noted that said pots 3 are handled while they are held out of alignment in a compartment 2 of a plant tray 1 having one or more eccentric protruding supporting surfaces 6 for supporting an eccentric portion of a bottom of a plant pot 3 only. The respective pot may be clamped in the respective compartment, preferably at least partly by one or more side wall segments 4 of the compartment 2 and/or at least partly by means of the one or more eccentric protruding supporting surfaces 6.

The invention is not restricted to the embodiments described above. It will be understood that many variants are possible.

For example, the tray may be made of a substantially untransparent material. Additionally or alternatively, the tray may be provided with a print.

These and other embodiments will be apparent to the person skilled in the art and are considered to lie within the scope of the invention as formulated in the following claims.

## Claims

1. Plant tray for holding plant pots, comprising at least one and preferably multiple plant pot compartments, wherein each compartment is arranged for receiving a plant pot, the compartment having one or more side wall segments for at least partly enclosing at least a lower portion of an outer wall of a plant pot, **characterized in that** the compartment is provided with one or more eccentric protruding supporting surfaces (6) for supporting an eccentric portion of a bottom of a plant pot only, wherein the compartment is arranged such that a bottom of a plant pot which has an outer wall substantially corresponding with the one or more side wall segments (4) of said compartment, will, when said plant pot is inserted into said compartment in an inserting direction (8) in which a central axis (9) of the compartment is substantially aligned with a central axis (10) of said plant pot, abut the one or more eccentric protruding supporting surfaces, thereby obstructing said bottom locally and subsequently facilitating misalignment of the pot with respect to the compartment when a force is applied to the pot, preferably a force applied at least partly in a downward direction and/or a direction directed inward the compartment, especially a force applied substantially in the insertion direction and/or in the longitudinal direction of the pot and/or compartment.

2. Tray according to claim 1, wherein the tray is at least partly flexible.

3. Tray according to claim 1 or 2, wherein the tray is a plastic tray, especially a thermoformed and/or vacuum formed tray.

4. Tray according to any one of the preceding claims, wherein the one or more side wall segments of the compartment taper in a downward or an inward direction of the compartment, said inward direction preferably corresponding to the insertion direction, and/or wherein the compartment is arranged for receiving a plant pot with an outer wall which corresponds substantially to a frustum of a cone or so-called truncated cone.

5. Tray according to any one of the preceding claims, wherein at least one of the one or more eccentric protruding supporting surfaces is formed as a ledge or as a substantially elongated surface, preferably extending at or near a boundary of the compartment and/or an outside wall segment of the compartment.

6. Tray according to any one of the preceding claims, wherein the one or more eccentric protruding supporting surfaces are extending substantially in or near a first cross section of the compartment, preferably wherein said first cross section is substantially transverse to the central axis of said compartment.

7. Tray according to claim 6, wherein the first cross section of the compartment is divided into two sectors, wherein each of the sectors is defined at least by two straight lines extending radially from a centre of said cross section, e.g. two radii, and an outside line defining a boundary of said cross section, wherein the one or more eccentric protruding supporting surfaces are provided in a first of the two sectors, and wherein a second of the two sectors is free of protruding supporting surfaces.

8. Tray according to claim 7, wherein the first sector is covering at most half of the area of the first cross section, preferably at most two-fifths, more preferably at most a third, such as at most a quarter of the area of the first cross section.

9. Tray according to any one of claims 6-8, wherein at least a central area of the first cross section is free of the protruding supporting surfaces.

10. Tray according to any one of the preceding claims, wherein the tray comprises a plurality of compartments, at least one of said compartments being located near an outer edge of the tray, wherein an outer edge section of the tray located adjacent to said at least one compartment is lower than a central section of the tray, especially such that one or more substantially upwardly extending side wall segments of the compartment which are located at or near said central section are extending further upwardly than one or more substantially upwardly extending side wall segments of the compartment which are located at or near the outer edge section of the tray.

11. Tray according to any one of the preceding claims, wherein the compartment is provided with a bottom which is spaced away from the one or more eccentric protruding supporting surfaces in a downward direction or an inward direction of the compartment.

12. Assembly of a tray according to any one of the preceding claims and at least one plant pot, wherein at least one of the compartments of the tray is provided with a plant pot, preferably a plant pot provided with plant substrate and/or a plant.

13. Method for assembling an assembly of a plant tray and at least one plant pot held by a compartment of said tray, comprising the steps of:
providing a plant tray having a compartment with one or more side wall segments for at least partly enclosing at least a lower portion of an outer wall of a plant pot, the compartment being provided with one or more eccentric protruding supporting surfaces for supporting an eccentric portion of a bottom of a plant pot only;
providing a plant pot with an outer wall corresponding with the one or more side wall segments of the compartment;
inserting said pot into the compartment to such extent that a first eccentric part of the bottom of said pot abuts with the one or more eccentric protruding supporting surfaces; and
bringing the pot out of alignment with respect to the compartment, especially by moving a second eccentric part of the bottom of the pot located substantially opposite the first eccentric bottom part to a level lower than a level of the one or more eccentric protruding supporting surfaces.

14. Method for handling plant pots, wherein plant pots are handled, preferably displayed, stored and/or transported, while said pots are held out of alignment in a compartment of a plant tray having one or more eccentric protruding supporting surfaces for supporting an eccentric portion of a bottom of a plant pot only.

## Patentansprüche

1. Pflanzenschale zum Aufnehmen von Pflanzentöpfen, umfassend mindestens einen und bevorzugt mehrere Pflanzentopffächer, wobei jedes Fach zum Aufnehmen eines Pflanzentopfs angeordnet ist, welches Fach ein oder mehrere Seitenwandsegmente hat, um mindestens teilweise mindestens einen unteren Teil einer Außenwand eines Pflanzentopfs zu umschließen, **dadurch gekennzeichnet, dass** das Fach mit einer oder mehreren exzentrisch hervorstehenden Stützflächen (6) versehen ist, um nur einen exzentrischen Teil eines Bodens von einem Pflanzentopf zu stützen, wobei das Fach so angeordnet ist, dass der Boden eines Pflanzentopfs, der eine Außenwand hat, die im Wesentlichen dem einen oder den mehreren der Seitenwandsegmente (4) des Fachs entspricht, wenn der Pflanzentopf in das Fach in einer Einsetzrichtung (8) eingesetzt wird, in der eine Mittelachse (9) des Fachs im Wesentlichen zu einer Mittelachse (10) des Pflanzentopfs ausgerichtet ist, an die eine oder mehrere der exzentrisch hervorstehenden Stützflächen stößt, wodurch der Boden lokal behindert wird und somit eine Fehlausrichtung des Topfs in Bezug auf das Fach erleichtert wird, wenn eine Kraft auf den Topf angewendet wird, bevorzugt eine Kraft, angewendet mindestens teilweise in einer Abwärtsrichtung und/oder einer Richtung, die nach innen in das Fach gerichtet ist, besonders eine Kraft, die im Wesentlichen in Einsetzrichtung und/oder in Längsrichtung des Topfs und/oder Fachs angewendet wird.

2. Schale nach Anspruch 1, wobei die Schale mindestens teilweise flexibel ist.

3. Schale nach Anspruch 1 oder 2, wobei die Schale eine Plastikschale ist, insbesondere eine thermogeformte und/oder vakuumgeformte Schale.

4. Schale nach einem der vorhergehenden Ansprüche, wobei das eine oder die mehreren der Seitenwandsegmente des Fachs sich in einer Abwärts-oder einer Einwärtsrichtung des Fachs verjüngen, wobei die Einwärtsrichtung bevorzugt der Einsetzrichtung entspricht und/oder wobei das Fach angeordnet ist zum Aufnehmen eines Pflanzentopfs mit einer Außenwand, die im Wesentlichen einem Kegelstumpf oder einem sogenannten abgeschnittenen Kegel entspricht.

5. Schale nach einem der vorhergehenden Ansprüche, wobei mindestens eine der einen oder mehreren exzentrisch hervorstehenden Stützflächen als ein Absatz oder als eine im Wesentlichen längliche Fläche geformt ist, bevorzugt verlaufend an oder nahe einer Begrenzung des Fachs und/oder einem Außenwandsegment des Fachs.

6. Schale nach einem der vorhergehenden Ansprüche, wobei die eine oder mehreren der exzentrisch hervorstehenden Stützflächen im Wesentlichen in oder nahe einem ersten Querschnitt des Fachs verlaufen, bevorzugt wobei der erste Querschnitt im Wesentlichen quer zur Mittelachse des Fachs ist.

7. Schale nach Anspruch 6, wobei der erste Querschnitt des Fachs in zwei Abschnitte unterteilt ist, wobei jeder der Abschnitte definiert wird von mindestens zwei geraden Linien, die radial von einer Mitte des Querschnitts verlaufen, z. B. zwei Radien, und einer Außenlinie, die eine Begrenzung des Querschnitts definiert, wobei die eine oder mehreren der exzentrisch hervorstehenden Stützflächen in einem ersten der zwei Abschnitte bereitgestellt sind und wobei ein zweiter der zwei Abschnitte frei von hervorstehenden Stützflächen ist.

8. Schale nach Anspruch 7, wobei der erste Sektor mindestens die Hälfte des Bereiches des ersten Querschnitts bedeckt, bevorzugt höchstens zwei Fünftel, bevorzugter höchstens ein Drittel, wie etwa höchstens ein Viertel des Bereiches des ersten Querschnitts.

9. Schale nach einem der Ansprüche 6-8, wobei mindestens ein mittlerer Bereich des ersten Querschnitts frei von den hervorstehenden Stützflächen ist.

10. Schale nach einem der vorhergehenden Ansprüche, wobei die Schale mehrere Fächer umfasst, wobei mindestens eines der Fächer nahe einer Außenkante der Schale angeordnet ist, wobei eine Außenkante der Schale neben dem mindestens einen Fach niedriger als ein mittlerer Abschnitt der Schale ist, insbesondere so, dass eines oder mehrere im Wesentlichen aufwärts verlaufenden Seitenwandsegmente des Fachs, die an oder nahe dem mittleren Abschnitt angeordnet sind, weiter aufwärts verlaufen als eines oder mehrere im Wesentlichen aufwärts verlaufenden Seitenwandsegmente des Fachs, die an oder nahe dem Außenkantenabschnitt der Schale angeordnet sind.

11. Schale nach einem der vorhergehenden Ansprüche, wobei das Fach mit einem Boden versehen ist, der von der einen oder den mehreren exzentrisch hervorstehenden Stützflächen in einer Abwärtsrichtung oder einer Einwärtsrichtung des Fachs beabstandet ist.

12. Anordnung einer Schale nach einem der vorhergehenden Ansprüche und mindestens eines Pflanzentopfs, wobei mindestens eines der Fächer der Schale mit einem Pflanzentopf versehen ist, bevorzugt einem Pflanzentopf, versehen mit einem Pflanzensubstrat und/oder einer Pflanze.

13. Verfahren zum Anordnen einer Anordnung einer Pflanzenschale und mindestens eines Pflanzentopfs, gehalten von einem Fach der Schale, umfassend folgende Schritte:
Bereitstellung einer Pflanzenschale mit einem Fach mit einem oder mehreren Seitenwandsegmenten, um mindestens teilweise mindestens einen unteren Teil einer Außenwand eines Pflanzentopfs zu umschließen, wobei das Fach mit einer oder mehreren exzentrisch hervorstehenden Stützflächen versehen ist, um nur einen exzentrischen Teil eines Bodens eines Pflanzentopfs zu stützen;
Bereitstellung eines Pflanzentopfs mit einer Außenwand entsprechend dem einen oder den mehreren der Seitenwandsegmente des Fachs;
Einsetzen des Pflanzentopfs in das Fach so weit, dass ein erster exzentrischer Teil des Bodens des Pflanzentopfs an eine oder mehrere der exzentrisch hervorstehenden Stützflächen stößt; und
Ausrichtung des Topfs in Bezug auf das Fach, insbesondere durch Bewegen eines zweiten exzentrischen Teils des Bodens des Topfs, angeordnet im Wesentlichen gegenüber dem ersten exzentrischen Bodenteil, zu einer Ebene, die tiefer ist als eine Ebene des einen oder der mehreren der exzentrisch hervorstehenden Stützflächen.

14. Verfahren zur Handhabung von Pflanzentöpfen, wobei Pflanzentöpfe gehandhabt, bevorzugt ausgestellt, gelagert und/oder transportiert werden, während die Töpfe verlagert in einem Fach einer Pflanzenschale mit einer oder mehreren exzentrisch hervorstehenden Stützflächen gehalten werden, um nur einen exzentrischen Teil eines Bodens eines Pflanzentopfs zu stützen.

## Revendications

1. Plateau à plantes destiné à contenir des pots de plantes, comprenant au moins un et de préférence plusieurs compartiments à pots de plantes, dans lequel chaque compartiment est agencé pour recevoir un pot de plante, le compartiment ayant un ou plusieurs segments de paroi latérale pour renfermer au moins partiellement au moins une partie inférieure d'une paroi extérieure d'un pot de plante, **caractérisé en ce que** le compartiment est pourvu d'une ou de plusieurs surfaces de support excentriques et saillantes (6) pour supporter une partie excentrique du fond d'un pot de plante uniquement, dans lequel le compartiment est agencé de telle manière que le fond d'un pot de plante qui a une paroi extérieure correspondant substantiellement au(x) segment(s) de paroi latérale (4) dudit compartiment, quand on insère ledit pot de plante dans ledit compartiment dans une direction d'insertion (8) dans laquelle un axe central (9) du compartiment est substantiellement aligné avec un axe central (10) dudit pot de plante, prend appui sur la ou les surface(s) de support excentriques et saillantes, en bouchant de ce fait ledit fond localement et en facilitant ensuite le défaut d'alignement du pot par rapport au compartiment quand on applique une force au pot, de préférence une force appliquée au moins partiellement dans une direction orientée vers le bas et/ou une direction orientée vers l'intérieur du compartiment, en particulier une force appliquée substantiellement dans la direction d'insertion et/ou dans la direction longitudinale du pot et/ou du compartiment.

2. Plateau selon la revendication 1, dans lequel le plateau est au moins partiellement flexible.

3. Plateau selon la revendication 1 ou 2, dans lequel le plateau est un plateau en plastique, en particulier un plateau thermoformé et/ou fabriqué sous vide.

4. Plateau selon l'une quelconque des revendications précédentes, dans lequel le ou les segment(s) de paroi latérale du compartiment se rétrécissent dans une direction orientée vers le bas ou dans une direction orientée vers l'intérieur du compartiment, ladite direction orientée vers l'intérieur correspondant de préférence à la direction d'insertion, et/ou dans lequel le compartiment est agencé pour recevoir un pot de plante ayant une paroi extérieure qui correspond substantiellement à un tronc de cône, ou à un cône tronqué.

5. Plateau selon l'une quelconque des revendications précédentes, dans lequel au moins l'une des surfaces de support excentriques et saillantes a la forme d'un rebord ou d'une surface substantiellement allongée, s'étendant de préférence à ou près d'une limite du compartiment et/ou d'un segment de paroi extérieure du compartiment.

6. Plateau selon l'une quelconque des revendications précédentes, dans lequel lesdites surfaces de support excentriques et saillantes s'étendent substantiellement dans ou près d'une première section transversale du compartiment, dans lequel de préférence ladite première section transversale est substantiellement transversale par rapport à l'axe central dudit compartiment.

7. Plateau selon la revendication 6, dans lequel la première section transversale du compartiment est divisée en deux secteurs, dans lequel chacun des secteurs est défini au moins par deux droites s'étendant radialement depuis un centre de ladite section transversale, par exemple deux rayons, et une ligne extérieure définissant une limite de ladite section transversale, dans lequel lesdites surfaces de support excentriques et saillantes sont placées dans un premier des deux secteurs, et dans lequel un deuxième des deux secteurs est exempt de surfaces de support saillantes.

8. Plateau selon la revendication 7, dans lequel le premier secteur recouvre au plus la moitié de la superficie de la première section transversale, de préférence au plus les deux cinquièmes, et mieux encore au plus un tiers, comme au plus un quart de la superficie de la première section transversale.

9. Plateau selon l'une quelconque des revendications 6 à 8, dans lequel au moins une région centrale de la première section transversale est exempte de surfaces de support saillantes.

10. Plateau selon l'une quelconque des revendications précédentes, dans lequel le plateau comprend une pluralité de compartiments, au moins l'un desdits compartiments étant situé près d'un bord extérieur du plateau, dans lequel une section de bord extérieure du plateau adjacente audit au moins un compartiment est plus basse qu'une section centrale du plateau, en particulier de telle manière qu'un ou plusieurs segments de paroi latérale du compartiment s'étendant substantiellement vers le haut qui se trouvent à ou près de ladite section centrale s'étendent davantage vers le haut qu'un ou plusieurs segments de paroi latérale du compartiment s'étendant substantiellement vers le haut qui se trouvent à ou près de la section de bord extérieure du plateau.

11. Plateau selon l'une quelconque des revendications précédentes, dans lequel le compartiment est pourvu d'un fond qui est espacé de la ou lesdites surfaces de support excentriques et saillantes dans une direction orientée vers le bas ou dans une direction orientée vers l'intérieur du compartiment.

12. Ensemble formé d'un plateau selon l'une quelconque des revendications précédentes et d'au moins un pot de plante, dans lequel au moins l'un des compartiments du plateau est pourvu d'un pot de plante, de préférence un pot de plante pourvu d'un substrat pour plante et/ou d'une plante.

13. Procédé d'assemblage d'un ensemble constitué d'un plateau à plantes et d'au moins un pot de plante contenu dans un compartiment dudit plateau, comprenant les étapes suivantes :
fournir un plateau à plantes ayant un compartiment comportant un ou plusieurs segments de paroi latérale pour renfermer au moins partiellement au moins une partie inférieure d'une paroi extérieure d'un pot de plante, le compartiment étant pourvu d'une ou de plusieurs surfaces de support excentriques et saillantes pour supporter une partie excentrique du fond d'un pot de plante uniquement ;
fournir un pot de plante ayant une paroi extérieure correspondant au(x) segment(s) de paroi latérale du compartiment ;
insérer ledit pot dans le compartiment sur une distance telle qu'une première partie excentrique du fond dudit pot prend appui sur la ou les surface(s) de support excentriques et saillantes ; et
mettre le pot en défaut d'alignement par rapport au compartiment, en particulier en déplaçant une deuxième partie excentrique du fond du pot située substantiellement à l'opposé de la première partie de fond saillante jusqu'à un niveau inférieur au niveau de la ou les surfaces de support excentriques et saillantes.

14. Procédé de manipulation de pots de plantes, dans lequel les pots de plantes sont manipulés, de préférence exposés, stockés et/ou transportés, tandis que lesdits pots sont maintenus non alignés dans un compartiment d'un plateau à plantes ayant une ou plusieurs surfaces de support excentriques et saillantes pour supporter une partie excentrique d'un fond d'un pot de plante uniquement.
